# EUROPEAN PATENT APPLICATION

(11) **EP 4 099 643 A1**
(43) Date of publication of application: **07.12.2022**
(21) Application number: 22177304.7
(22) Date of filing: 03.06.2022
(51) Int. Cl.: H04L 12/40, H04L 41/0631, H04L 43/08, H04L 43/10, H04L 43/12

(54) **A METHOD, A SYSTEM AND A COMPUTER PROGRAM PRODUCT FOR MONITORING AN INDUSTRIAL ETHERNET PROTOCOL TYPE NETWORK**

(30) Priority: 04.06.2021 NL 2028390
(71) Applicant: Procentec B.V., 3011 PW Rotterdam (NL)
(72) Inventor: DULCEY, Matthew, 3011 PW Rotterdam (NL); DE BRABANDER, Markus Adrianus Bernardus, 3011 PW Rotterdam (NL); DUMAY, Egbertus, 3011 PW Rotterdam (NL)
(74) Representative: V.O.

(57) **Abstract**

The invention relates to a method for monitoring an industrial ethernet protocol type network. The method comprises the steps of collecting data from the network, using a monitoring device connected to the network, and generating a data file containing the collected data and/or data derived thereof. Further, the method comprises the steps of transmitting the data file to a server, and identifying, using the server, a cause profile associated with the data file.

## Description

The invention relates to a method for monitoring an industrial ethernet protocol type network.

An industrial ethernet based network is widely used for various (industrial) applications. Sometimes these networks suffer from a technical malfunction, which can lead to considerable downtime of a facility, and thus to a possible large financial loss. In order to solve such a technical malfunction errors in the network can be localized. The diagnosis may be performed people trained finding error profiles. However, this approach has several disadvantages. For example, the diagnosis is subjective as it is dependent on the experience of this particular individual. Moreover, this current method is also labor-intensive and expensive.

An object of the invention is to overcome at least some of the above disadvantages associated with monitoring an industrial ethernet based network.

Thereto, the invention provides a method for monitoring an industrial ethernet protocol type network, such as PROFINET, Ethernet/IP and MODBUS TCP. The method comprises the steps of collecting data, preferably in the form of device operational or communications messages, from the network, using a monitoring device or multiple monitoring devices connected to the network, generating a data file or data files containing the collected data and/or data derived thereof, such as data point or communication messages, transmitting the data file(s) to a server, and identifying, using the server, a cause profile associated with the data file.

By providing a method for monitoring an industrial ethernet protocol type network that uses a server for automatically identifying a cause profile of observed errors, a more reliable diagnosing approach can be adopted for obtaining a base level network condition profile, in particular in view of specific error patterns that trigger files for analysis. Costs can be saved as less trained people need to be involved in the complete monitoring process. Furthermore, by employing such a method one can guarantee a more objective monitoring approach.

The collected data may include observed errors, and may fully or partially include so-called active data from the deployed devices in the network such as SNMP information that may be public or may be obtained via a private manufacturer such as MIB, LLDP, cyclic data, acyclic data, object data and so on. Optionally, the collected data also includes so-called passive data, retrieved via a test access point TAP, such as error messages, protocols and/or other messages e.g. communicated via frames of the actual network communication traffic between devices or devices and a controller.

Advantageously, the identifying step includes the sub-steps of comparing data of the data file with data in a database containing historical data and corresponding cause profiles, and/or applying an identification algorithm to data of the data file, and/or feeding a trained statistical model with data of the data file, thereby efficiently and effectively incorporating knowledge of error profiles into the monitoring process.

Preferably, the method includes a step of transmitting a response message to the monitoring device and/or software acting as a collection point for the response and corresponding result message, where the response message represents the identified cause profile or multiple identified cause profiles. It is highly preferably that the cause profiles are in simple read text form. Further, the response message may include a confidence level for each identified cause level, thereby providing relevant error profile information, realizing an advantage that if the network is not functioning properly one can prioritize which causes should first be considered. The response message may also include information about a possible expected solution for the observed collected data signals.

According to another aspect of the invention, a monitoring system for monitoring an industrial ethernet protocol type network is provided, comprising a monitoring device(s) connectable to the network and a server communicatively connectable to the monitoring device, wherein the monitoring device is arranged for performing the steps of collecting data from the network, generating a data file containing the collected data and/or data derived thereof, and transmitting the data file to a server, and wherein the server is arranged for performing the step of identifying a cause profile associated with the data file.

Further, the invention relates to a computer program product for diagnosing a fieldbus network. A computer program product may comprise a set of computer executable instructions stored on a data carrier, such as but not limited to a flash memory, a CD or a DVD. The set of computer executable instructions, which allow a programmable computer to carry out the method as defined above, may also be available for downloading from a remote server, for example via the Internet, e.g. as an app.

The computer program product comprises computer readable code for monitoring an industrial ethernet protocol type network, such as PROFINET, Ethernet/IP, MODBUS TCP, for causing a server to perform the steps of: receiving a data file from a monitoring device connected to the network, the data file containing data collected from the network, using the monitoring device, and/or data derived thereof, and identifying a cause profile associated with the data file.

Other advantageous embodiments according to the inventions are described in the following claims.
Fig. 1 shows a schematic view of a monitoring system according to the invention, and
Fig. 2 shows a flow chart of an embodiment of a method according to the invention.

In the figures identical or corresponding parts are represented with the same reference numerals. The drawings are only schematic representations of embodiments of the invention, which are given by manner of non-limited examples.

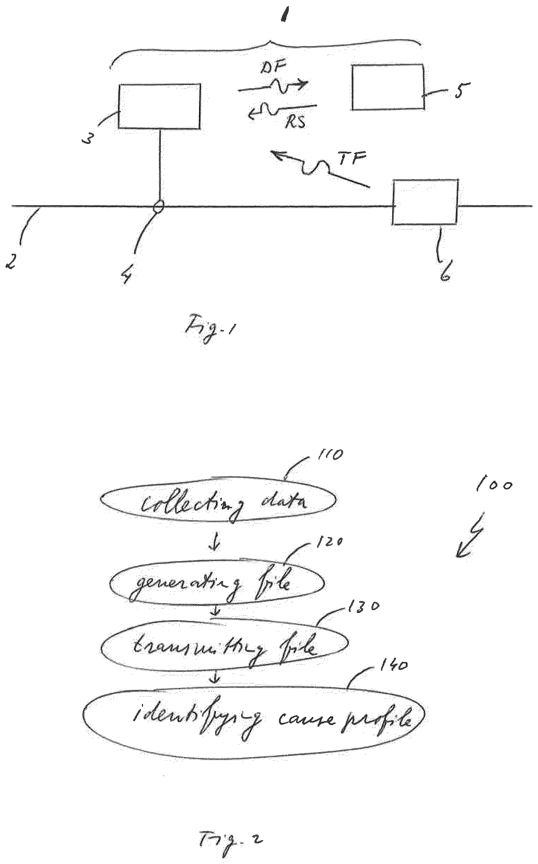

Fig. 1 shows a schematic view of a monitoring system 1 according to the invention. The system 1 is arranged for monitoring an industrial ethernet protocol type network 2, also shown, also referred to as an industrial ethernet infrastructure based (modified) network, for example PROFINET, Ethernet/IP or MODBUS TCP.

The system 1 is provided with a monitoring device 3, such as an oscilloscope, for connection to the industrial ethernet protocol type network 2, at a connection terminal 4 of the network 2. The system 1 is further provided with a server 5 that is communicatively connectable to the monitoring device 3.

In Fig. 1, the monitoring device 3 is connected to the network 2 for collecting so-called active data, also referred to as "polling" devices, the active data including for example SNMP information that is public or is obtained via a private manufacturer such as MIB, LLDP, cyclic data, acyclic data, object data and/or manufacture specific data or object files. The collected data can be in the form of device operational or communications messages from the network.

Further, in Fig. 1,the server 5 is communicatively connected to the monitoring device 3 for exchanging digital files and/or other signals therebetween.

The industrial ethernet network 2 includes a test access point 6, also referred to as industrial test access point, TAP, for collecting so-called passive data, also referred to as "tapping" device, the passive data including for example error messages, protocols or other messages communicated via frames of the actual network communication traffic between devices or devices and a controller. The test access point 6 is communicatively connected to the monitoring device 3 for forwarding the collected passive data as a transmission file TF or other transmission signal from the test access point 6 towards the monitoring device 3.

In collecting the active and/or passive data, various types of information can be collected including device information, communication information or communications data of the network and/or other network information such as network metrics. The device information may include current device IP address, MAC address, HW version, SW version, firmware or settings or current device status such as processor power, power supply, manufacturer error codes (via device profiles such as GSD or EDP file) or other physical or setting device states. The communication information may include information about physical properties of cables that are used in the network, such as copper or fiber cables or wifi connections, in discards, out discards, port load, closest neighbor LLDP, connected ports, such as port A to device port B, ring redundancy status (such as common rings used like MRP, DLR, RSTP or other) lost connections and/or damages or missing frames. The network information may include condition monitoring for anomalies about a certain threshold level, protocols being communicated, new protocols, new devices or electronic services added and/or changes in profiles or settings.

The connection between the monitoring device 3 and the server 5 can be wired, such ascopper or fiber optics, or wireless. Similarly, the connection between the test access point 6 and the monitoring device 3 can be wired, such as copper or fiber optics, or wireless. Connections can be direct or via indirect, via intermediate points. Further, encryption / encoding algorithms can be applied on either or both communication connections or channels.

Further, the monitoring device 3 and the server 5 can each be implemented as a single device or as a distributed system. Also, the monitoring device 3 and the server 5 may, in principle, be integrated in a single unit. Alternatively, the server 5 may be located at a remote location, e.g. having Internet connectivity or connectivity to a local or global communications network.

During operation, the monitoring device 3 collects data from the network 2, via its connection to the network, then collecting active data, and/or via the test access point 6 of the network 2, then collecting passive data.

Subsequently, the monitoring device 3 generates a data file or data files DF containing the collected data and/or data derived thereof such as combined data, accumulated data or extracted data, such as data point or communication messages. The data file DF is thus based on collected data such as observed error(s). Also, the monitoring device 3 transmits the data file DF to the server 5, via the communication channel between the monitoring device 3 and the server 5. If the transmitted data file DF has been encoded before transmission, the server 5 is arranged for decoding the received data file DF.

In operation, the server 5 receives the communicated data file DF and identifies a cause profile associated with the data file DF, then using e.g. a categorization approach to determine what may be any potential (most likely) cause of the observed error(s). Examples of which are: too long cable, dirty connectors, cable stress (such as fiber bends), EMC, device flooding, signal interference, mismatched configuration, incorrect network settings, manufacturer error codes and other such common faults. In identifying the cause profile, also referred to as diagnose profile, a number of sub-steps can be performed, e.g. including a sub-step of comparing data of the data file DF with data in a database containing historical data and corresponding cause profiles, and/or a sub-step of applying an identification algorithm to data of the data file DF, and/or a sub-step of feeding a trained statistical model with data of the data file.

Then, observed error characteristics deviating from normal expected operation parameters of an industrial ethernet based network can automatically be categorized.

As an example, the server 5 may determine whether active and/or passive data in the data file DF is available. Further, the server 5 may determine what kind of error is observed, which device(s) may be involved with the error, what may be the history of the network or device(s) or other relevant issues related to the kind of error that is observed. Potential errors may include a faulty device, cabling issues, an (network) overloaded device, incorrect setting, protocol error and/or infrastructure error, etc.

In practice, a single cause profile or a multiple number of cause profiles associated with the data file DF can be identified.

After identifying the cause profile(s), the server 5 can transmit a response message RS to the monitoring device 3, the response message RS representing the identified cause profile(s). Then, the user of the monitoring device 3 is informed about the identified cause profile(s). As an example, the response message RS also has a parameter associated with a confidence level that has been determined for each identified cause profile. As a further example, the parameter of the response message RS may be associated with a most likely cause profile. Alternatively, the response message RS does not include any statistical information of the identified cause profile(s). The transmitted response message RS may also include a suggestion for a possible expected solution for the identified cause profile(2). Generally, a result of any categorized error characteristic may be provided e.g. included in a response message, preferably provided by the server 5. The categorized error characteristic may e.g. relate to any observed communication issue, then providing a result of what the communication issues could be and/or any potential misconfiguration of a device and/or regarding protocol specific items such as MRP or DLR ring misconfigurations. In this way, the process may include returning a result about where a potential issue is, not just monitoring if a condition has been met.

In a process of monitoring an industrial ethernet protocol type network, a single generic ruleset may be applied that is plant or sub-plant independent. In other words, a single e.g. global ruleset may be applied in the process.

The process may include analyzing industrial ethernet protocol type networks globally using on a single ruleset. Based on the single ruleset an end-user may be notified when an abnormality is observed. In this notification, hints may be included about a potential cause of the problem, as well as an associated likelihood, e.g. in percentages. After a problem has been remedied, the server may receive feedback information about remedy actions and the cause of the problem that has been remedied. The feedback information can be used for improving the monitoring process and system. As an example, a trained statistical model may be fed with the feedback information.

The cause profile may e.g. relate to a device status, network hardware status and/or network software status.

Figure 2 shows a flow chart of an embodiment of a method 100 according to the invention. The method 100 is used for monitoring an industrial ethernet protocol type network 2. The method comprises a step of collecting 110 data from the network, using a monitoring device connected to the network, a step of generating 120 a data file containing the collected data and/or data derived thereof, a step of transmitting 130 the data file to a server, and a step of identifying 140, using the server, a cause profile associated with the data file.

The method for monitoring an industrial ethernet protocol type network 2 can be performed using dedicated hardware structures, such as FPGA and/or ASIC components.

Otherwise, the method can also at least partially be performed using a computer program product comprising instructions for causing a processor of a monitoring device 3 to perform at least a number of the above described steps of the method according to the invention, e.g. at least the collecting step 110, the generating step 120 and/or the transmitting step 130. All steps can in principle be performed on a single processor. However, it is noted that at least one step can be performed on a separate processor. A processor can be loaded with a specific software module.

Dedicated software modules can be provided, e.g. from the Internet.

The invention is not restricted to the embodiments described herein. It will be understood that many variants are possible.

It is noted that the monitoring system may be arranged for collecting both active and passive data, as described above, or active data only. In the latter case, the use of the test access point 6 is superfluous.

It is further noted that the test access point 6 can be communicatively connected to the server 5, in addition to or instead of the connection to the monitoring device 3 for forwarding the collected passive data as a transmission file TF or other transmission signal from the test access point 6 towards the server 5. Also, multiple monitoring devices can be used for collecting data from the network.

These and other embodiments will be apparent for the person skilled in the art and are considered to fall within the scope of the invention as defined in the following claims. For the purpose of clarity and a concise description features are described herein as part of the same or separate embodiments. However, it will be appreciated that the scope of the invention may include embodiments having combinations of all or some of the features described.

## Claims

1. A method for monitoring an industrial ethernet protocol type network, comprising the steps of:
collecting data from the network, using a monitoring device connected to the network;
generating a data file containing the collected data and/or data derived thereof, such as data point or communication messages,;
transmitting the data file to a server, and
identifying, using the server, a cause profile associated with the data file.

2. A method according to claim 1, wherein the step of collecting data from the network is performed using multiple devices connected to the network.

3. A method according to claim 1 or 2, wherein the collected data are in the form of device operational and/or communications messages from the network.

4. A method according to claim 1, 2 or 3, wherein the collected data includes SNMP information that may be public or may be obtained via a private manufacturer such as MIB, LLDP, acyclic data, object data and/or manufacture specific data.

5. A method according to claim 1, 2, 3 or 4, wherein also a test access point on the network is used for collecting data signals from the network.

6. A method according to claim 5, wherein the data collected via the test access point includes error messages and/or protocols e.g. communicated via frames of the actual network communication traffic between devices or devices and a controller.

7. A method according to any of the preceding claims, wherein multiple data files are generated and transmitted to the server.

8. A method according to any of the preceding claims, wherein the transmitted data file is encoded and wherein the server is arranged for decoding the received data file.

9. A method according to any of the preceding claims, wherein the identifying step includes the sub-steps of:
comparing data of the data file with data in a database containing historical data and corresponding cause profiles, and/or
applying an identification algorithm to data of the data file, and/or
feeding a trained statistical model with data of the data file.

10. A method according to any of the preceding claims, wherein multiple cause profiles associated with the data file are identified.

11. A method according to any of the preceding claims, further comprising a step of transmitting a response message from the server to the monitoring device, the response message representing the identified cause profile.

12. A method according to any of the preceding claims, wherein the response message further comprises a parameter associated with a confidence level for each identified cause profile.

13. A method according to any of the preceding claims, wherein the cause profile relates to a device status, network hardware status and/or network software status.

14. A monitoring system for monitoring an industrial ethernet protocol type network, comprising a monitoring device connectable to the network and a server communicatively connectable to the monitoring device, wherein the monitoring device is arranged for performing the steps of:
collecting data from the network;
generating a data file containing the collected data and/or data derived thereof, and
transmitting the data file to a server,
and wherein the server is arranged for performing the step of:
identifying a cause profile associated with the data file.

15. A computer program product for monitoring an industrial ethernet protocol type network, the computer program product comprising computer readable code for causing a server to perform the steps of:
receiving a data file from a monitoring device connected to the network, the data file containing data collected from the network, using the monitoring device, and/or data derived thereof, and
identifying a cause profile associated with the data file.
